# EUROPÄISCHE PATENTSCHRIFT

(11) **EP 3 030 345 B1**
(45) Veröffentlichungstag und Bekanntmachung des Hinweises auf die Patenterteilung: **28.10.2020**
(21) Anmeldenummer: 14749807.5
(22) Anmeldetag: 07.08.2014
(51) Int. Cl.: B01J 13/00

(54) **HERSTELLUNG VON OBERFLÄCHENMODIFIZIERTE METALLKOLLOIDE**
PRODUCTION OF SURFACE-MODIFIED METAL COLLOIDS
PRÉPARATION DE COLLOÏDES MÉTALLIQUES MODIFIÉS EN SURFACE

(30) Priorität: 09.08.2013 DE 102013108664
(43) Veröffentlichungstag der Anmeldung: 15.06.2016
(73) Patentinhaber: Leibniz-Institut für Neue Materialien gemeinnützige GmbH, 66123 Saarbrücken (DE)
(72) Erfinder: BECKER-WILLINGER, Carsten, 66130 Saarbrücken (DE); BUKOWSKI, Mirko, 66386 St. Ingbert (DE); ALI, Budiman, 66117 Saarbrücken (DE); JOCHUM, Marlon, 66646 Marpingen (DE)
(74) Vertreter: Patentanwälte Gierlich & Pischitzis Partnerschaft mbB
(86) Internationale Anmeldenummer: PCT/EP2014/066997
(87) Internationale Veröffentlichungsnummer: WO 2015/018897

(56) Entgegenhaltungen:
- WO-A1-02/36701
- WO-A1-03/093383
- WO-A1-03/094574

## Beschreibung

### Gebiet der Erfindung

Die vorliegende Erfindung betrifft die Herstellung von oberflächenmodifizierte Metall-Kolloidpartikel die gleichermaßen sowohl in Wasser, als auch in weniger polaren sowie unpolaren organischen Medien dispergiert werden können. Sie eignen sich daher zur Verwendung in verschiedenartigsten Matrixumgebungen wie beispielsweise in lösungsmittelarmen, wasserbasierten Lacken, sowie high-solid-Systemen und ermöglichen eine direkte Verwendung in Oberflächenbeschichtungen ohne aufwändige Aufarbeitung von üblicherweise auftretenden Zwischenstufen bei der Formulierung derselben. Aufgrund ihrer Zusammensetzung lassen sich die Metall-Kolloidpartikel als Additive zur Einstellung elektrischer, photonischer, optischer sowie insbesondere auch physiologisch wirksamer Eigenschaften verwenden.

### Stand der Technik

Metall-Kolloidpartikel werden üblicherweise durch Reduktionsprozesse aus ionischen Vorstufen, zumeist Metallsalzen, gewonnen. Die Reduktionsreaktion kann entweder thermisch oder photochemisch in Gegenwart eines Reduktionsmittels induziert werden. Um die kolloidchemische Stabilität der gebildeten Dispersionen zu gewährleisten, werden in der Regel unterschiedlichste Dispergierhilfsmittel eingesetzt.

DE 102006017696 A1 betrifft ein Verfahren zur Herstellung von konzentrierten Metallpartikelsolen mit einem Metallpartikelgehalt ≥ 1 g/l in einem zweistufigen Syntheseschritt. Dabei wird eine Metallsalzlösung zunächst mit einer Hydroxidionen enthaltenden Lösung und anschließend in einem zweiten Schritt mit einem Reduktionsmittel zur Reaktion gebracht, wobei mindestens eine der Lösungen ein obligatorisches Dispergierhilfsmittel (Schutzkolloid) umfasst. Bei den Dispergierhilfsmitteln handelt es sich um organische niedermolekulare und polymere Verbindungen mit Hydroxyl-, Amino-, Amido- oder Sulfonatgruppen als funktionellen Gruppen. Die Hydroxydionen stammen von typischen Basen, wie z.B. Alkalimetallhydroxiden, aliphatischen Aminen oder Alkalimetall-Alkoxiden. Reduktionsmittel sind z.B. Ascorbinsäure, Hydrazin oder Natriumborhydrid.

Einen ähnlichen Ansatz über Bildung von Mizellen aus einem Blockcopolymerisat, die das kolloidale Metall eingeschlossen enthalten, verfolgt DE 19506113 A1.

WO 03/093383 A1, WO 03/094574 A1 und WO 02/36701 A1 beschreiben Beschichtungen aus anorganischen Kondensaten mit Silberkolloiden, welche in situ in der Beschichtung erzeugt werden. Nachteilig an beiden Ansätzen ist zum einen die Verwendung eines giftigen Reduktionsmittels (Hydrazin, Natriumborhydrid), welches im Überschuss eingesetzt werden muss, um eine vollständige Reduktion der ionischen Vorstufe zum Metall zu erzielen. Dies ist insbesondere dann ein wichtiger Punkt, wenn es sich um unedlere Metalle, wie z.B. Kupfer handelt, die durch Luftsauerstoff leicht wieder vorzeitig oxidiert werden können. Die nach der Reaktion vorhandene Restmenge an toxischem Reduktionsmittel muss gegebenenfalls in einem aufwändigen Prozess vollständig entfernt werden. Nach der vollständigen Entfernung der Restmenge an Reduktionsmittel sind die erhaltenen Partikel nicht mehr gegen nachfolgende, zumeist unkontrollierte Oxidation geschützt, was die Langzeitstabilität im Sinne des Metallkolloid-Charakters erheblich herabsetzt. Weiterhin ist die Verwendung von spezifisch ausgewählten Dispergierhilfsmitteln von Nachteil, da ein Wechsel des Zielmediums eine gezielte Anpassung des verwendeten Dispergierhilfsmittels erforderlich macht und diese Moleküle bei Metallkolloiden aus unedlen Metallen ebenfalls keinen Schutz gegen nachträgliche Oxidation bieten. Dies ist ebenfalls ein Nachteil der Arbeiten von EP 0796147 B1 bei denen Tensid-stabilisierte, reversible Mono- und Bimetall-Kolloide aus Metallsalzen in Gegenwart von stark hydrophilen Tensiden mit chemischen Reduktionsmitteln gebildet werden. In diesem Fall ist die Verwendbarkeit der Partikel beispielsweise ausschließlich auf Wasser als Dispergiermedium beschränkt. Vergleichbares gilt auch für US 8071259 B2, wobei reine Edelmetallkolloide und Kolloide aus Edelmetallen in Kombination mit unedleren Metallen in wässriger Lösung mit einem Polysaccharid als temporärem Stabilisator zur Erzeugung einer katalytisch wirksamen Beschichtung auf einer Polymerelektrolytmembran offenbart werden.

Für Anwendungen im medizinisch diagnostischen Bereich werden oft metallische Solpartikel gefordert, die eine möglichst enge Partikelgrößenverteilung in einem ausgewählten Partikelgrößenbereich aufweisen.

Ein Verfahren zur Herstellung solcher Partikel wird in
EP 0426300 B1 beansprucht. Das mehrstufige Syntheseverfahren selbst ausgehend von einer ersten Metall, Stabilisierungsmittel und ein erstes Reduktionsmittel enthaltenden Lösung und anschließendem Mischen der gebildeten metallischen Nuklei mit einer weiteren Lösung aus Metall und einem zweiten Reduktionsmittel lässt sehr gut den hohen Aufwand des gesamten Prozesses erkennen. Das zweite Reduktionsmittel dient dabei der Verhinderung der spontanen Enukleation der gebildeten Partikel. Halbleiter- und Metallkolloide können während der Synthese auch mit bifunktionellen Liganden, wie z.B. funktionellen Alkylalkoxysilanen versehen werden.

Auch EP 1034234 B1 verwendet diesen Weg, um die gebildeten Kolloidpartikel anschließend mit inerten oxidischen Schutzhüllen aus z.B. SiO₂, Al₂O₃ oder ZrO₂ auszustatten. Die Modifikationen aus der zuvor gebildeten Zwischenstufe sind allerdings nicht in beliebigen Medien dispergierbar und die oxidischen Schutzhüllen schirmen den Kern weiterhin hermetisch ab.

Die bereits erwähnte Ascorbinsäure wurde auch von [Xuedong Wu et al., Green Chem. 2011, 13, 900] als Reduktionsmittel verwendet, um oxidationsstabile Kupferkolloide aus Kupfersalzen zu erzeugen, die zur Herstellung leitfähiger Tinten verwendet werden können (CN 101880493 A). Die Ascorbinsäure wird dabei im Rahmen der Reduktionsreaktion teilweise zu Dehydroascorbinsäure oxidiert und verbleibt auf der Oberfläche der gebildeten Kupfer-Kolloidteilchen. Nachteilig ist hieran, dass der überwiegende Teil der eingesetzten Ascorbinsäure nicht umgesetzt wird und auf der Oberfläche der gebildeten Teilchen verbleibt. Dies ist zwar positiv im Hinblick auf eine nachhaltige Verhinderung eines nachfolgenden Oxidationsprozesses im Sinnes eines Erhalts an Langzeitstabilität, jedoch nachteilig im Zusammenhang mit einem wünschenswerten physiologischen Effekt wie z.B. einer mikrobiziden Wirksamkeit, die beispielsweise eine kontrollierte Abgabe von Kupferionen durch selektive, bedarfsgerechte Oxidation unter physiologisch relevanten Bedingungen erfordert.

### Aufgabe

Die Aufgabe der vorliegenden Erfindung ist es, ein Verfahren anzugeben, das eine einfache Herstellung von Metallkolloidpartikeln ohne zusätzliches Schutzkolloid ermöglicht. Die hergestellten Metallkolloidpartikel sind stabilisiert gegen unkontrollierte Oxidation und damit in einfacher Weise für elektrische, optische, opto-elektronische, photonische sowie insbesondere physiologisch relevante, z.B. mikrobizide, Anwendungen und Beschichtungen geeignet.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Die Aufgabe wird durch ein Verfahren zur Herstellung von Metallkolloiden umfassend folgende Schritte gelöst:
a) Herstellen einer Zusammensetzung umfassend
   a1) mindestens eine Art von Metallionen;
   a2) mindestens ein organisches Reduktionsmittel;
   a3) mindestens einen Komplexbildner umfassend mindestens eine funktionelle Gruppe, welche mit den hergestellten Metallkolloiden interagieren kann, das Reduktionsmittel und/oder die oxidierte Form des Reduktionsmittels als ein Komplexbildner fungieren kann, wobei das molare Verhältnis zwischen Metallionen und Komplexbildner zwischen 30:1 und 1,5:1 liegt;
   a4) mindestens ein Lösungsmittel;
b) thermische und/oder photochemische Aktivierung während oder nach der Herstellung der Zusammensetzung;
c) Reduktion der mindestens einen Art von Metallionen zu Metallkolloiden;
d) Aufreinigung der modifizierten Metallkolloide.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

In einem ersten Schritt wird eine Zusammensetzung umfassend Metallionen hergestellt. Die Metallionen können auf unterschiedliche Weise in die Zusammensetzung eingebracht werden. Bevorzugt als Metallsalze. Dies können Nitrate, Sulfate, Karbonate, Halogenide (Fluoride, Chloride, Bromide, Iodide), Metallsäuren (wie H(AuCl₄), Perchlorate), Salze von organischen Säuren wie Acetate, Tartrate, Salze von organischen Anionen wie Acetylacetonate sein. Bevorzugt sind Chloride, Sulfate, Nitrate, Metallsäuren.

Die Metallionen sind bevorzugt Ionen der Metalle der Gruppen 8 bis 16. Besonders bevorzugt sind Ionen der Metalle Cu, Ag, Au, Ni, Pd, Pt, Co, Rh, Ir, Ru, Os, Se, Te, Cd, Bi, In, Ga, As, Ti, V, W, Mo, Sn und/oder Zn, ganz besonders bevorzugt Cu, Ag, Au, Ni, Pd, Pt, Co, Rh, Ir, Ru, Os, Se, Te und/oder Zn.

Beispiele für mögliche Verbindungen sind CuCl, CuCl₂, CuSO₄, Cu(NO₃)₂, AgNO₃, H(AuCl₄), PdCl₂, ZnCl₂, ZnSO₄, Cu(CH₃COO)₂, Kupferacetylacetonat, CuCO₃, Cu(ClO₄)₂, wobei auch Hydrate dieser Verbindungen verwendet werden können.

Ganz besonders bevorzugt sind die Metallionen Kupferionen, insbesondere Kupfer(II)ionen. Diese können aus den Metallsalzen CuCl₂, CuSO₄, Cu(NO₃)₂, Cu(CH₃COO)₂, Kupferacetylacetonat, CuCO₃, Cu(ClO₄)₂ eingebracht werden.

Die Metallsalze können in der Zusammensetzung gelöst vorliegen oder als Teil eines suspendierten Feststoffs.

Die Zusammensetzung umfasst auch ein organisches Reduktionsmittel. Dieses muss ein ausreichend niedriges Redoxpotential aufweisen, um die Metallionen der Zusammensetzung zum Metall reduzieren zu können. Insbesondere ein niedrigeres Standardpotential als das Metall des Metallions, das reduziert werden soll. So besitzt Kupfer ein Standardpotential von 0,337 V (Cu²⁺/Cu⁰), Silber ein Standardpotential von 0,799 V, Platin ein Standardpotential von 1,2 V und Gold ein Standardpotential von 1,40 V.

In einer Ausführungsform der Erfindung ist das organische Reduktionsmittel eine Verbindung mit einem Molekulargewicht von unter 1000 g/mol, unter 800 g/mol, unter 600 g/mol, unter 500 g/mol, unter 400 g/mol. Unabhängig davon weisen die Reduktionsmittel bevorzugt ein Molekulargewicht von über 30 g/mol, über 40 g/mol, über 50 g/mol, über 60 g/mol, über 70 g/mol, über 80 g/mol auf.

Die Reduktionsmittel sind bevorzugt reduzierend wirkende Carbonsäuren, wie Oxalsäure, Zitronensäure, Weinsäure, Äpfelsäure, Zucker, insbesondere Monosaccharide oder Disaccharide (wie Glukose oder Saccharose), Uronsäuren, Aldehyde, Ameisensäure. Besonders bevorzugt sind Ascorbinsäure, Zitronensäure oder Äpfelsäure.

Das Reduktionsmittel ist kein Polymer oder Oligomer, d.h. es enthält nicht mehr als 2 repetitive Einheiten.

Das Reduktionsmittel ist löslich oder dispergierbar in der Zusammensetzung.

In einer Ausführungsform der Erfindung ist das Verhältnis von Reduktionsmittel und Metallionen 5:1 bis 1:30, bevorzugt 2:1 bis 1:30, berechnet als die molare Menge an Elektronen, welche vom Reduktionsmittel zur Verfügung gestellt werden können, und der molaren Menge an Elektronen, welche für die Reduktion aller Metallionen zum Metall benötigt werden. Ein Verhältnis von 2:1 bedeutet, dass das Reduktionsmittel in der Menge eingesetzt wird, so dass die doppelte molare Menge an Elektronen vom Reduktionsmittel zur Verfügung gestellt werden kann, als für die Reduktion aller Metallionen benötigt werden. So kann das Reduktionsmittel einen Überschuss an Elektronen zur Verfügung stellen. In diesem Fall verbleibt nach Reduktion aller Metallionen ein Rest an nicht reduziertem Reduktionsmittel. Andererseits besteht auch die Möglichkeit, dass ein Unterschuss an Reduktionsmittel in Bezug auf die Elektronen verwendet wird (z.B. 1:2). In diesem Fall werden nicht reduzierte Metallionen im Reaktionsmedium verbleiben. Bevorzugt beträgt das Verhältnis 5:1 bis 1:5, 3:1 bis 1:3, besonders bevorzugt 2:1 bis 1:2.

In einer bevorzugten Ausführungsform wird mit einem Unterschuss an Reduktionsmittel gearbeitet, d.h. von einem Verhältnis kleiner als 1:1, bevorzugt zwischen 1:1 bis 1:4, besonders bevorzugt zwischen 1:1 und 1:3. Dadurch wird verhindert, dass ein nicht oxidiertes Reduktionsmittel in der Zusammensetzung bzw. auf den hergestellten Metallkolloiden verbleibt. Dies erleichtert die Verwendung dieser Metallkolloide beispielsweise in bioziden Anwendungen, wo kontrolliert Metallionen in die Umgebung abgegeben werden sollen. Bevorzugte Metallkolloide für solche Anwendungen sind Silber- oder Kupferkolloide, besonders bevorzugt Kupferkolloide.

Die Zusammensetzung umfasst auch mindestens einen Komplexbildner. Dies ist eine Verbindung, welche mindestens eine funktionelle Gruppe umfasst, welche mit den hergestellten Metallkolloiden interagieren kann. Ein solcher Komplexbildner ist eine Verbindung, welche einen Komplex mit den reduzierten Metallkolloiden bildet. Dadurch bildet sich auf der Oberfläche der Metallkolloide eine Schicht der Komplexbildner, um diese vor weiterer Oxidation zu schützen. Die hergestellten Metallkolloide sind daher lagerstabil und können auch nach Trocknung wieder redispergiert werden ohne Agglomerate zu bilden. Gleichzeitig beeinflusst der Komplexbildner durch die Belegung der Oberfläche der Metallkolloide auch das Verhalten der Metallkolloide zu ihrer Umgebung. Abhängig vom verwendeten Komplexbildner können die hergestellten Metallkolloide an unterschiedliche Bedingungen angepasst werden. Auf diese Weise ist es möglich Metallkolloide bereitzustellen, welche in einer Vielzahl von Medien redispergierbar sind.

Eine Gruppe, welche mit dem reduzierten Metallionen interagieren kann, ist meistens eine Gruppe mit mindestens einem Atom mit einem freien Elektronenpaar. Bevorzugt umfasst der Komplexbildner mindestens ein Heteroatom ausgewählt aus der Gruppe umfassend N, 0, S, Cl, Br und I.

Bevorzugt ist mindestens eine funktionelle Gruppe ausgewählt aus der Gruppe umfassend Aminogruppen, Carbonylgruppen wie Carbonsäuregruppen, Carbonsäureamidgruppen, Imidgruppen, Carbonsäureanhydridgruppen, Carbonsäureestergruppen, Aldehydgruppen, Ketogruppen, Urethane, in 1,2-Stellung oder 1,3-Stellung benachbarte Carbonylgruppen, Thiolgruppen, Disulfidgruppen, Hydroxylgruppen, Sulfonylgruppen, Phosphorsäuregruppen. Es können auch mehrere der vorgenannten Gruppen vorhanden sein.

In Abhängigkeit von dem hergestellten Metallkolloid kann eine andere funktionelle Gruppe am besten geeignet sein. So sind für Kupfer Carbonylgruppen oder Thiole bevorzugt. Für Silberkolloide sind Aminofunktionen bevorzugt.

Der Komplexbildner ist dabei bevorzugt eine Verbindung der Formel (I)

Z-R¹

Wobei Z für NH₂, NHR², N(R²)₂, R²-C=O, SH, R²-S-S, R²-(C=O)-(C=O), OH, SO₃, oder R²-S=O steht und

R¹ eine geradkettige Alkyl- oder Alkoxygruppe mit 4 bis 15 C-Atomen oder eine verzweigte oder cyclische Alkyl- oder Alkoxygruppe mit 3 bis 15 C-Atomen oder eine Alkenyl- oder Alkinylgruppe mit 2 bis 15 C-Atomen, wobei die vorstehend genannten Gruppen mit jeweils einem oder mehreren Resten R² substituiert sein können und wobei eine oder mehrere benachbarte oder nicht benachbarte CH₂-Gruppen in den oben genannten Gruppen durch-R²C=CR²-, -CΞC-, C=O, C=NR², -C(=O)-O-, -C(=O)-NR²-, Si(R²)₂, NR², P(=O)(R²), -O-, -S-, SO oder SO₂ ersetzt sein können, oder ein aromatisches Ringsystem mit 6 bis 12 aromatischen Ringatomen, das jeweils mit einem oder mehreren Reste(n) R² substituiert sein kann, oder ein heteroaromatisches Ringsystem mit 5 bis 12 aromatischen Ringatomen sein, das jeweils mit einem oder mehreren Reste(n) R² substituiert sein kann.

Dabei ist R² bei jedem Auftreten gleich oder verschieden H, D, F, Cl, Br, I, OH, CHO, C(=O)R³, CN, CR³=(R³)₂, C(=O)OR³, NCO, OCN, C(=O)N(R³)₂, Si(R³)₃, N(R³)₂, NO₂, P(=O)(R³)₂, OSO₂R³, S(=O)R³, S(=O)₂R³, eine geradkettige Alkyl-, Alkoxy- Thioalkoxygruppe mit 1 bis 15 C-Atomen oder eine verzweigte oder cyclische Alkyl- Alkoxy- Thioalkoxygruppe mit 3 bis 15 C-Atomen oder eine Alkenyl- oder Alkinylgruppe mit 2 bis 15 C-Atomen, wobei die oben genannten Gruppen jeweils mit einem oder mehreren Resten R³ substituiert sein können und wobei eine oder mehrere benachbarte oder nicht benachbarte CH₂-Gruppen in den oben genannten Gruppen durch -R³C=CR³-, -CΞC-, C=O, C=NR³, -C(=O)-O-, -C(=O)-NR³-, Si(R³)₂, NR³, P(=O) (R³), -O-, -S-, SO oder SO₂ ersetzt sein können, oder ein aromatisches Ringsystem mit 6 bis 30 aromatischen Ringatomen, das jeweils mit einem oder mehreren Reste(n) R³ substituiert sein kann, oder ein heteroaromatisches Ringsystem mit 5 bis 30 Ringatomen, das jeweils mit einem oder mehreren Reste(n) R³ substituiert sein kann, wobei zwei oder mehr Reste R³ oder R¹ und R³ miteinander verknüpft sein können und einen Ring bilden können.

R³ ist bei jedem Auftreten gleich oder verschieden, H, D, F oder ein aliphatischer, aromatischer und/oder heteroaromatischer Rest mit 1 bis 10 C-Atomen, in dem auch ein oder mehrere H-Atome durch D oder F ersetzt sein können; dabei können zwei oder mehrere Substituenten R⁴ auch miteinander verknüpft sein und ein mono- oder polycyclisches, aliphatisches, heteroaliphatisches, aromatisches oder heteroaromatisches Ringsystem bilden.

Bevorzugte Komplexbildner weisen in R¹ mindestens eine funktionelle Gruppe mit mindestens einem Heteroatom auf.

Bevorzugte Komplexbildner sind Dehydroascorbinsäure, Acetoacetat, Acetylaceton, Diemthylglyoxal (2-Oxopropanal), Triketoindan, Thiolessigsäure, α, β oder γ-Aminosäuren mit mindestens einer weiteren funktonalen Gruppe zur Interaktion mit den Metallkolloiden, wie Cystein, Cystin, Methionin, Ornithin, Lysin, Arginin, Histidin, Glutaminsäure, Asparaginsäure, Asparakin, Serin, Glycin, Glutamin, Threonin, Tyrosin, Tryptophan, 4-Mercapto-4-methylpentaton, Phosphat, Silane der Formel II

SiR⁵ₐX₍₄₋ₐ₎ (II)

wo R⁵ ein nicht hydrolysierbarer Rest und bei jedem Auftreten gleich oder verschieden ist und eine geradkettige Alkylgruppe mit 3 bis 15 C-Atomen oder eine verzweigte oder cyclische Alkylgruppe mit 3 bis 15 C-Atomen oder eine Alkenyl- oder Alkinylgruppe mit 2 bis 15 C-Atomen, wobei die vorstehend genannten Gruppen mit jeweils einem oder mehreren Resten R⁶ substituiert sein können und wobei eine oder mehrere benachbarte oder nicht benachbarte CH₂-Gruppen in den oben genannten Gruppen durch-R⁶C=CR⁶-, -CΞC-,C=O, C=NR⁶, -C(=O)-O-, -C(=O)-NR⁶-, Si(R⁶)₂, NR⁶, P(=O)(R⁶), -O-, -S-, SO oder SO₂ ersetzt sein können, oder ein aromatisches Ringsystem mit 6 bis 12 aromatischen Ringatomen, das jeweils mit einem oder mehreren Reste(n) R⁶ substituiert sein kann, oder ein heteroaromatisches Ringsystem mit 5 bis 12 aromatischen Ringatomen sein, das jeweils mit einem oder mehreren Reste(n) R⁶ substituiert sein kann.

Dabei ist R⁶ bei jedem Auftreten gleich oder verschieden H, D, F, Cl, Br, I, CHO, CN, C(=O)OH, NO₂, NH₂, OH, NCO, OCN.

X ist eine hydrolysierbare Gruppe und bei jedem Auftreten gleich oder verschieden und Cl, Br, I, geradkettige Alkoxygruppe mit 1 bis 10 C-Atomen oder eine verzweigte oder cyclische Alkoxygruppe mit 3 bis 10 C-Atomen oder eine Aryloxygruppe mit 6 bis 12 C-Atomen.

a ist ein Wert zwischen 1 und 4.

Dabei umfasst mindestens ein R⁶ eine funktionelle Gruppe zur Interaktion mit den Metallkolloiden, bevorzugt hat genau ein R⁶ eine funktionelle Gruppe zur Interaktion mit den Metallkolloiden.

Beispiele für R⁶ sind Aminoalkyl- oder Thioalkylgruppen. Bevorzugte Gruppen für X sind Cl, Br, I, Methoxy, Ethoxy, n-Propoxy, iso-Propoxy, n-Butoxy, tert.-Butoxy, n-Pentoxy, iso-Pentoxy, n-Hexoxy, Heptoxy, n-Oktoxy.

Beispiele für bevorzugte Silane sind Aminosilane wie H₂N-(CH₂)₃-Si(OC₂H₅)₃, (C₂H₅)₂N(CH₂)₃Si(OC₂H₅)₃, (CH₃)₂N(CH₂)₃Si(OC₂H₅)₃, H₂N-C₆H₄-Si(OCH₃)₃, (CH₃)₂N-CH₂-CH₂-N(CH₃)-(CH₂)₃-Si(OC₂H₅)₃, H₂N-CH₂-CH₂-NH- (CH₂)₃-Si(OCH₃)₃, H₂N- (CH₂)₂-NH-(CH₂)₂-NH-(CH₂)₃-Si(OCH₃)₃, Thiosilane wie HS-CH₂-Si(OC₂H₅)₃, HS-CH₂-CH₂-Si(OC₂H₅)₃, HS-CH₂-CH₂-CH₂-Si(OC₂H₅)₃, HS-(CH₂)₄-Si(OC₂H₅)₃, HS-CH₂-Si(OCH₃)₃, HS-CH₂-CH₂-Si(OCH₃)₃, HS-CH₂-CH₂-CH₂-Si (OCH₃)₃, HS-(CH₂)₄-Si(OCH₃)₃, HS-(CH₂)₃-Si(CH₃) (OCH₃)₂, oder Silane mit anderen funktionellen Gruppen wie NC-(CH₂)₃-Si(OCH₃)₃, HOOC-HC=CH-O-(CH₂)₃-Si(OCH₃)₃, OCN-CH₂-CH₂-CH₂-Si(OC₂H₅)₃, HOOC-CH₂-CH₂-CH₂-Si (OC₂H₅)₃.

In einer Ausführungsform der Erfindung weist der Komplexbildner neben der mindestens einen funktionellen Gruppe zur Interaktion mit den Metallkolloiden mindestens eine weitere funktionelle Gruppe auf, mit der eine organische Vernetzung möglich ist, z. B. mit einer umgebenden Matrix oder einer weiteren Verbindung. Beispiele für solche funktionellen Gruppen sind Epoxid-, 0-xetan-, Hydroxy-, Ether-, Amino-, Monoalkylamino-, Dialkylamino-, Amid-, Carboxy-, Mercapto-, Thioether-, Vinyl-, Iso- cyanat-, Acryloxy-, Methacryloxy-, Säureanhydrid-, Säurehalogenid-, Cyano-, Halogen-, Aldehyd-, Alkylcarbonyl-, Sulfonsäuregruppen. Bevorzugte Gruppen sind Isocyanatgruppen, welche auch blockiert sein können, Epoxidgruppen, Aminogruppen und Anhydridgruppen. Die Gruppen können insbesondere dazu dienen die modifizierten Metallkolloide in Polymerzusammensetzungen einzuarbeiten. Einerseits über die direkte Teilnahme an der Polymerisationsreaktion der Monomere und/oder mit der Reaktion mit funktionellen Gruppen an dem Polymer.

In einer Ausführungsform der Erfindung ist der mindestens eine Komplexbildner eine niedermolekulare Verbindung. Bevorzugt ist dies eine Verbindung mit einem Molekulargewicht von unter 1000 g/mol, unter 800 g/mol, unter 600 g/mol, unter 500 g/mol, unter 400 g/mol, unter 300 g/mol. Unabhängig davon weist der Komplexbildner ein Molekulargewicht von über 30 g/mol, über 40 g/mol, über 50 g/mol auf.

Die Komplexbildner sind keine Polymere oder Oligomere, d.h. sie weisen nicht mehr als 2 repetitive Einheiten auf.

In einer Ausführungsform sind die Komplexbildner keine Betaine, wobei Aminosäuren nicht als Betaine angesehen werden.

In einer Ausführungsform der Erfindung ist das Reduktionsmittel bereits ein Komplexbildner oder eine Vorläuferverbindung davon. Besonders bevorzugt ist die oxidierte Form des Reduktionsmittels ein Komplexbildner. Dann enthält die Zusammensetzung ein Reduktionsmittel, welches gleichzeitig die Vorläuferverbindung für den Komplexbildner darstellt. Ein Beispiel für eine solche Verbindung ist Ascorbinsäure. Aus dieser entsteht durch Reduktion Dehydroascorbinsäure, welche ein Komplexbildner ist.

In einer Ausführungsform der Erfindung umfasst die Zusammensetzung mindestens ein Reduktionsmittel und mindestens einen weiteren Komplexbildner. Bevorzugt ist der weitere Komplexbildner verschieden vom Reduktionsmittel oder der oxidierten Form des Reduktionsmittels.

Das molare Verhältnis zwischen Metallionen und Komplexbildner liegt bevorzugt zwischen 30:1 und 1,5:5. Bei einem Überschuss an Komplexbildner kommt es zu einer sehr starken Belegung der Oberfläche der erhaltenen Metallkolloide. Gleichzeitig ist die Aufreinigung der erhaltenen Metallkolloide erschwert, da eine größere Menge an ungebundenen Komplexbildnern entfernt werden müssen.

Trotz des Unterschusses an Komplexbildner werden Metallkolloide erhalten, welche durch eine Schicht von Komplexbildner vor Agglomeration und sofortiger Oxidation geschützt sind.

Wenn das Reduktionsmittel auch als Komplexbildner oder als Vorstufe davon dienen kann, gelten die vorgenannten Verhältnisse für die Summe von ggf. noch zusätzlich eingesetzten Komplexbildner und dem entsprechenden Reduktionsmittel (z.B. Ascorbinsäure als Reduktionsmittel und Vorstufe für einen Komplexbildner und Cystein als zusätzlichen Komplexbildner) unter Berücksichtigung der für das Reduktionsmittel angegebenen Verhältnisse der Elektronen.

Durch den geringen Einsatz von Reduktionsmittel und Komplexbildner ist die Aufreinigung der Metallkolloide deutlich einfacher, als wenn eine im Überschuss verwendete Verbindung abgetrennt werden muss.

Die Zusammensetzung umfasst auch noch ein Lösungsmittel. Dies kann Wasser oder ein anderes polares Lösungsmittel sein. Bevorzugt ist als Lösungsmittel Wasser. Besonders bevorzugt umfasst die Zusammensetzung nur Wasser als Lösungsmittel.

In einer bevorzugten Ausführungsform beträgt die Konzentration an Metallionen in der Zusammensetzung vor der Aktivierung über 0,1 mol/l, über 0,2 mol/l, über 0,3 mol/l.

Davon unabhängig beträgt die Konzentration der Metallionen in der Zusammensetzung in Abhängigkeit von der Löslichkeit bevorzugt unter 3 mol/l.

Die Konzentration des Reduktionsmittels bzw. der Reduktionsmittel ist bevorzugt größer als 0,1 mol/l, größer als 0,2 mol/l. Davon unabhängig liegt die Konzentration des Reduktionsmittels bzw. der Reduktionsmittel in der Zusammensetzung unter 3 mol/l, bevorzugt unter 1 mol/l.

Die Konzentration des Komplexbildners bzw. der Komplexbildner oder der Vorstufen davon ist bevorzugt größer als 0,001 mol/l, größer als 0,005 mol/l. Davon unabhängig liegt die Konzentration des Komplexbildners bzw. der Komplexbildner in der Zusammensetzung unter 3 mol/l, bevorzugt unter 1 mol/l.

Die Bestandteile der Zusammensetzung können auf unterschiedliche Weise zusammengegeben werden.

In einer bevorzugten Ausführungsform werden zunächst die Metallionen und der Komplexbildner in die Zusammensetzung eingebracht. Bevorzugt werden die Metallionen als erstes in das Lösungsmittel eingebracht und danach der Komplexbildner zugegeben. Die Zugabe erfolgt dabei bevorzugt langsam, bevorzugt über einen Zeitraum von 5 Minuten bis 2 Stunden. Währenddessen kann die Lösung durchmischt werden und/oder schon auf die Temperatur zur späteren Aktivierung gebracht werden.

Der Komplexbildner kann als Substanz zugegeben werden, z. B. als Pulver oder Flüssigkeit. In einer bevorzugten Ausführungsform wird der Komplexbildner in Lösung oder Suspension zugegeben, besonders bevorzugt in Lösung.

Das Reduktionsmittel wird bevorzugt als letzte Komponente zugegeben. Bevorzugt wird das Reduktionsmittel langsam zugegeben, bevorzugt über einen Zeitraum von 5 Minuten bis 2 Stunden. Die Zugabe kann als Substanz, z. B. als Pulver oder Flüssigkeit, erfolgen. In einer bevorzugten Ausführungsform wird das Reduktionsmittel als Lösung oder Suspension zugegeben, bevorzugt als Lösung.

Wenn als Reduktionsmittel eine Verbindung verwendet wird, welche eine Vorstufe für einen Komplexbildner ist oder selbst als Komplexbildner dienen kann und keine weiteren Komplexbildner verwendet werden, entspricht die Zugabe des Komplexbildners der Zugabe des Reduktionsmittels.

Die Zusammensetzung enthält bevorzugt keine weiteren Bestandteile wie Dispergiermittel, Katalysatoren oder Stabilisatoren.

Der pH-Wert der Zusammensetzung vor der Reduktion liegt bevorzugt unter 7, unter 6, unter 5, unter 4, unter 3, unter 2. Besonders bevorzugt liegt er zwischen 0 und 5, 0 und 3, 1 und 3, 1 und 2.

Das Verfahren kann auch in einer bestimmten Atmosphäre durchgeführt werden, z. B. Argon oder Stickstoff. Bevorzugt ist die Durchführung an normaler Luft.

Während oder nach der Herstellung der Zusammensetzung kann eine thermische oder photochemische Aktivierung erfolgen. Dies bedeutet, dass die Reduktion der Metallionen beginnt.

Als photochemische Aktivierung kann eine Bestrahlung mit UV-Licht erfolgen.

Eine thermische Aktivierung ist in der Regel eine Erwärmung der Zusammensetzung. In Abhängigkeit vom verwendeten Lösungsmittel sind dies Temperaturen zwischen 20 °C und 120 °C, bevorzugt zwischen 30 °C und 100 °C.

Eine Aktivierung während der Herstellung der Zusammensetzung bedeutet, dass während der Mischung der Zusammensetzung eine Erwärmung und/oder Bestrahlung erfolgt.

Durch die Aktivierung kommt es zur Reduktion der mindestens einen Art von Metallionen zu Metallkolloiden. Durch die gleichzeitige Anwesenheit des Komplexbildners wird eine Agglomeration der Metallkolloide verhindert.

Es kann notwendig sein, die Reduktion in einem bestimmten Temperaturbereich durchzuführen. Dieser kann in Abhängigkeit von den verwendeten Metallionen und Reduktionsmittel unterschiedlich sein. Der Temperaturbereich kann zwischen 20 und 120 °C liegen.

Die Reaktion wird bevorzugt unter Durchmischung der Zusammensetzung durchgeführt, um eine Agglomeration der Kolloide zu verhindern. Dies kann durch Rühren geschehen.

In Abhängigkeit von den verwendeten Metallionen, Reduktionsmittel und Komplexbildner kann es notwendig sein, die Reaktion für eine bestimmte Zeit zu führen. Die Zeit kann zwischen 5 Minuten und 48 Stunden liegen, bevorzugt zwischen 3 Stunden und 48 Stunden. Dabei kann die Temperatur erhöht oder gesenkt werden. Auch kann die Durchmischung der Lösung fortgeführt werden. Bevorzugt wird die Lösung bei der gleichen Temperatur gehalten, aber etwas schwächer gerührt.

Die Reaktion wird dabei ohne die Bildung von Mizellen geführt. Auch ist der Prozess ein einphasiger Prozess, d.h. es liegt zu keinem Zeitpunkt eine weitere flüssige Phase vor, z.B. Emulsion. Der Prozess umfasst bevorzugt keine weiteren Schritte, wie die mehrstufige Zugabe von weiteren Reduktionsmitteln.

In einem weiteren Schritt werden die modifizierten Metallkollode aufgereinigt. Dies bedeutet, dass sie von nicht an den Metallkolloiden gebundenen Verbindungen, wie Reduktionsmittel, oxidiertes Reduktionsmittel oder Komplexbildner gereinigt werden. Die Aufreinigung kann dabei durch Zentrifugation und/oder Filtration erfolgen. Bevorzugt wird die Zusammensetzung mit Querstromfiltration behandelt. Dadurch ist es möglich, nicht an die Metallkolloide gebundene Komplexbildner und Reduktionsmittel oder deren Rückstände aus der Zusammensetzung zu entfernen. Dies ist insbesondere aufgrund der Verwendung von niedermolekularen Verbindungen als Reduktionsmittel und Komplexbildner möglich. Diese lassen sich einfach auf diese Weise abtrennen, ohne dass das Lösungsmittel vollständig entfernt werden muss.

Dabei ist es wichtig, dass die Bedingungen für die Querstromfiltration so gewählt werden, dass die hergestellten Metallkolloide nicht abgetrennt werden. Es ist allerdings möglich, dass nur Metallkolloide einer bestimmten Mindestgröße zurückgehalten werden. Auf diese Weise kann die Größenverteilung der erhaltenen Metallkolloide gesteuert werden.

Die Abtrennung kann dadurch verbessert werden, dass die Querstromfiltration mehrfach durchgeführt wird, wobei bei jedem Durchlauf neues Lösungsmittel hinzugefügt wird. Dieses Lösungsmittel kann sich auch von dem Lösungsmittel der Zusammensetzung unterscheiden. In einer bevorzugten Ausführungsform der Erfindung ist das hinzugefügte Lösungsmittel das Lösungsmittel der Zusammensetzung.

Die Querstromfiltration kann dabei auch als kontinuierlicher Prozess geführt werden.

Falls die Metallkolloide isoliert werden sollen, können sie auch abzentrifugiert und dekantiert werden.

Die erhaltenen Metallkolloide zeichnen sich durch eine besonders hohe Kristallinität auf. Bevorzugt weisen sie einen Anteil von > 80 % an kristalliner Phase auf (gemessen mit XRD; Röntggendiffraktometrie).

In einer Ausführungsform der Erfindung liegt der Kohlenstoffgehalt der erhaltenen Metallkolloide zwischen 1 Gew.-% und 30 Gew.-% (gemessen mit Hochtemperaturverbrennung).

In einer weiteren Ausführungsform der Erfindung enthalten die Metallkolloide 0,1 Gew.-% bis 5 Gew.-% N, wenn der verwendete Komplexbildner mindestens ein N-Atom umfasst.

In einer weiteren Ausführungsform der Erfindung enthalten die Metallkolloide 0,1 Gew.-% bis 15 Gew.-% S, wenn der verwendete Komplexbildner mindestens ein S-Atom umfasst.

In einer weiteren Aufführungsform der Erfindung sind die erhaltenen Metallkolloide im Wesentlichen frei von Metalloxiden. Bevorzugt sind für Metallkolloide mit einem Anteil an kristalliner Phase von > 80 % im XRD-Spektrum keine Signale von Metalloxiden zu erkennen.

Die erhaltenen Metallkolloide sind in unterschiedlichen Medien vollständig redispergierbar. Dabei kann es sich um unpolare Medien, wie Kohlenwasserstoffe (Pentan, Hexan, Benzol, Toluol), polare Medien wie Wasser, Alkohole (Methanol, Ethanol, Propanol, Isopropanol, Butanol), Ether (Diethylether, Tetrahydrofuran), Pulverlacke, Reaktivharze wie Polyurethanharze, Acrylate, Methacrylate, Polymere wie Thermoplaste, thermoplastische Elastomere handeln. Dadurch eignen sich die hergestellten Metallkolloide als Additive für viele Anwendungen.

In Abhängigkeit von dem verwendeten Komplexbildner kann die Langzeitstabilität der hergestellten Dispersionen variieren. Bevorzugt ist eine Stabilität von über einem Tag, besonders bevorzugt eine Stabilität von über 5 Tagen. Die Stabilität wird nach vollständiger Redispergierung durch visuelle Inspektion bestimmt.

Die erhaltenen Metallkolloide können mit folgendem Verfahren weiter modifiziert werden. Dazu wird in einem ersten Schritt das Metallkolloid in mindestens einem Lösungsmittel redispergiert. Bevorzugt handelt es sich um ein Metallkolloid, das mit mindestens einer niedermolekularen Verbindung belegt ist. Besonders bevorzugt handelt es sich um eine Verbindung wie sie vorstehend als Komplexbildner beschrieben wurde.

Es handelt sich um ein Metallkolloid, was gemäß dem erfindungsgemäßen Verfahren erhalten wurde. Solche Metallkolloide sind mit mindestens einer niedermolekularen Verbindung belegt.

Zu der Dispersion der Metallkolloide wird analog zu dem vorher beschriebenen Verfahren mindestens ein Komplexbildner zugegeben, wie sie auch für das Herstellungsverfahren beschrieben wurden.

In einer bevorzugten Ausführungsform der Erfindung liegt das molare Verhältnis zwischen Metallkolloiden und Komplexbildner, bzw. Vorstufen davon, zwischen 30:1 und 1:1, bevorzugt zwischen 30:1 und 1,5:1. Trotz des Unterschusses an Komplexbildner werden Metallkolloide erhalten, welche durch eine Schicht von Komplexbildner vor Agglomeration und sofortiger Oxidation geschützt sind.

In Abhängigkeit von den verwendeten Metallkolloid und Komplexbildner kann es notwendig sein, die Reaktion für eine bestimmte Zeit zu führen. Die Zeit kann zwischen 5 Minuten und 48 Stunden liegen, bevorzugt zwischen 3 Stunden und 48 Stunden. Dabei kann die Temperatur erhöht oder gesenkt werden. Auch kann die Durchmischung der Lösung fortgeführt werden. Bevorzugt wird die Lösung bei der gleichen Temperatur gehalten, aber etwas schwächer gerührt.
Es kann notwendig sein, die Oberflächenmodifikation in einem bestimmten Temperaturbereich durchzuführen. Dieser kann in Abhängigkeit von den verwendeten Metallionen und Reduktionsmittel unterschiedlich sein. Der Temperaturbereich kann zwischen 20 und 120 °C liegen.

Im nächsten Schritt wird die Zusammensetzung von nicht mit dem Metallkolloid assoziierte Verbindungen gereinigt. Dies können Komplexbildner und/oder die vorherige Oberflächenmodifikation der Metallkolloide sein. Zur Reinigung wird bevorzugt Querstromfiltration verwendet. Dieses Verfahren hat den Vorteil, dass die verwendeten niedermolekularen Verbindungen auf einfache Weise abgetrennt werden können.

Es kann notwendig sein, die Querstromfiltration mehrfach durchzuführen, wobei bei jedem Durchlauf neues Lösungsmittel zugegeben wird.

Die erhaltenen Metallkolloide haben bevorzugt einen mittleren Durchmesser (gemessen mit TEM) unter 40 nm, unter 30 nm, unter 20 nm, bevorzugt zwischen 1 nm und 40 nm, zwischen 2 und 30 nm, besonders bevorzugt zwischen 3 und 20 nm, 5 und 20 nm.

Die oberflächenmodifizierten Metallkolloide können mit dem beschriebenen Verfahren auf einfache Weise mit sehr unterschiedlichen Oberflächenmodifikationen versehen werden.

Sie können daher in viele Umgebungen einfach eingearbeitet werden. Dies können Monomere oder Polymere sein, welche fest oder flüssig vorliegen können. Es kann sich um Polyethylen, Polypropylen, Polyacrylat, wie Polymethylmethacrylat und Polymethylacrylat, Polyvinylbutyral, Polycarbonat, Polyurethane, ABS-Copolymere, Polyvinylchlorid, Polyether, Epoxidharze, oder um Vorstufen oder Monomer der vorgenannten Polymere, wie Epoxide, Isocyanate, Methacrylate, Acrylate handeln.

In einer bevorzugten Ausführungsform werden die modifizierten Metallkolloide zu den Vorstufen oder Monomeren gegeben.

Solche Zusammensetzungen können weitere Additive enthalten, die in der Technik üblicherweise je nach Zweck und gewünschten Eigenschaften zugegeben werden. Konkrete Beispiele sind Vernetzungsmittel, Lösungsmittel, organische und anorganische Farbpigmente, Farbstoffe, UV-Absorber, Gleitmittel, Verlaufsmittel, Netzmittel, Haftvermittler und Starter. Der Starter kann zur thermisch oder photochemisch induzierten Vernetzung dienen.

Die Zusammensetzungen können als Flüssigkeit verarbeitet werden. Sie können aber auch zu Feststoffen verarbeitet werden, beispielsweise zu Pulverlacken. Dazu werden sie mit den entsprechenden Vorstufen vermischt, extrudiert und zu Pulverlacken, beispielsweise auf Polyurethanbasis, verarbeitet werden.

Falls Beschichtungen erzeugt werden, können die Beschichtungszusammensetzungen auf jede übliche Weise auf eine Oberfläche aufgetragen werden. Hierbei können alle gängigen Beschichtungsverfahren eingesetzt werden. Beispiele sind Schleuderbeschichten, (Elektro)tauchbeschichten, Rakeln, Sprühen, Spritzen, Spinnen, Ziehen, Schleudern, Gießen, Rollen, Streichen, Flutbeschichten, Foliengießen, Messergießen, Slotcoating, Meniskus-Coating, Curtain-Coating, Walzenauftrag oder übliche Druckverfahren, wie Siebdruck oder Flexoprint. Die Menge der aufgetragenen Beschichtungszusammensetzung wird so gewählt, dass die gewünschte Schichtdicke erzielt wird.

Nach Aufbringung der Beschichtungszusammensetzung auf eine Oberfläche oder dem Einbringen der Zusammensetzung in eine Form, erfolgt gegebenenfalls eine Trocknung, z. B. bei Umgebungstemperatur (unter 40 °C).

Die gegebenenfalls vorgetrocknete Beschichtung oder der gegebenenfalls vorgetrocknete Formkörper wird anschließend einer Behandlung mit Wärme und/oder Strahlung unterworfen.

In einer bevorzugten Ausführungsform werden die Metallkolloide mit mindestens 0,15 Gew.-%, mindestens 0,3 Gew.-%, mindestens 0,4 Gew.-%, mindestens 0,5 Gew.%, und davon unabhängig mit maximal 5 Gew.-%, maximal 3 Gew.-%, in eine Zusammensetzung eingearbeitet. Insbesondere für Kupfer-Metallkolloide können die daraus hergestellten Beschichtungen oder Formkörper mit mikrobiziden Eigenschaften ausgestattet werden.

Die modifizierten Metallkolloide können daher in einen Formkörper oder eine Beschichtung eingearbeitet werden, bevorzugt in den vorgenannten Gewichtsanteilen. Bevorzugt sind Formkörper und Beschichtungen aus Kunststoffen, besonders bevorzugt Polyethylen, Polypropylen, Polyacrylat, wie Polymethylmethacrylat und Polymethylacrylat, Polyvinylbutyral, Polycarbonat, Polyurethane, ABS-Copolymere, Polyvinylchlorid, Polyether und Epoxidharze.

Mögliche Substrate für eine solche Beschichtung sind beispielsweise Kunststoff, Metall, Glas oder Keramik.

Die modifizierten Metallkolloide hergestellt gemäß der Erfindung sind in vielen Gebieten verwendbar.

Aufgrund ihrer Zusammensetzung lassen sich die Metall-Kolloidpartikel als Additive zur Einstellung elektrischer, photonischer, optischer sowie insbesondere auch physiologisch wirksamer Eigenschaften verwenden.

Sie können Beispielsweise als Additive, Pigmente oder Füllstoffe, in Beschichtungen, Farben, Kunststoffen und Gläsern verwendet werden.

Aufgrund ihrer flexiblen Oberflächenbelegung eignen sie sich auch für Anwendungen in Katalysatoren.

Sie können in optischen oder opto-elektronischen, elektrischen Anwendungen verwendet werden, beispielsweise zur Erhöhung der Leitfähigkeit von Kunststoffen oder leitfähigen Tinten.

Sie können auch für spektroskopische Zwecke eingesetzt werden.

Sie können auch als Additive mit bioziden Eigenschaften verwendet werden. Durch die niedermolekulare Belegung der Metallkolloide können, z.B. im Fall von Kupfer oder Silber, biozid wirksame Kupferionen oder Silberionen langsam freigesetzt werden. So können diese Metallkolloide als biozide Wirkstoffe in Zusammensetzungen verwendet werden. Dies ist auch der Fall, wenn die Metallkolloide in eine Matrix eingearbeitet wurden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.
- Fig. 1: XRD-Spektrum der in Beispiel 1 erhaltenen Metallkolloiden nach Querstromfiltration (Cu Kα);
- Fig. 2: XRD-Spektrum der in Beispiel 3 erhaltenen Metallkolloide nach Querstromfiltration;
- Fig. 3: XRD-Spektrum der in Beispiel 7 erhaltenen Metallkolloide nach Querstromfiltration;
- Fig. 4: Infrarot-Spektren verschiedener Verbindungen (CuV144, CuV152d, CuV152c, CuV152e);
- Fig. 5: Infrarot-Spektren einer Verbindung (CuV152d) vor und nach der Querstromfiltration;
- Fig. 6: TEM-Aufnahmen getrockneter Partikeldisperisonen;

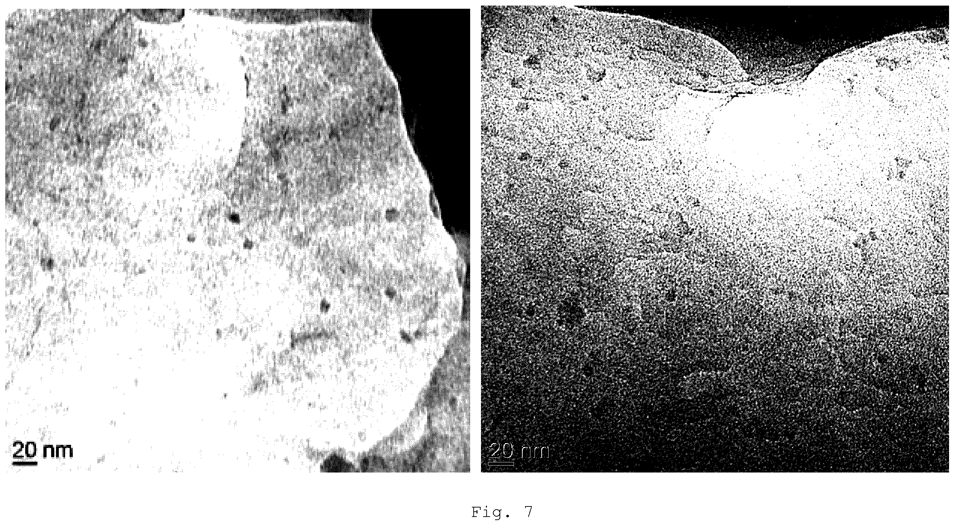

- Fig. 7: TEM-Aufnahmen von Cu-Kolloidpartikeln in Epoxidharz Araldit (1 Gew.-% Kupfer, CuV152e in Beispiel 9) links, rechts CuV152c;
- Fig. 8: Dispersionen von Metallkolloiden in unterschiedlichen Medien nach vollständiger Dispergierung und Lagerung über 4 Wochen;

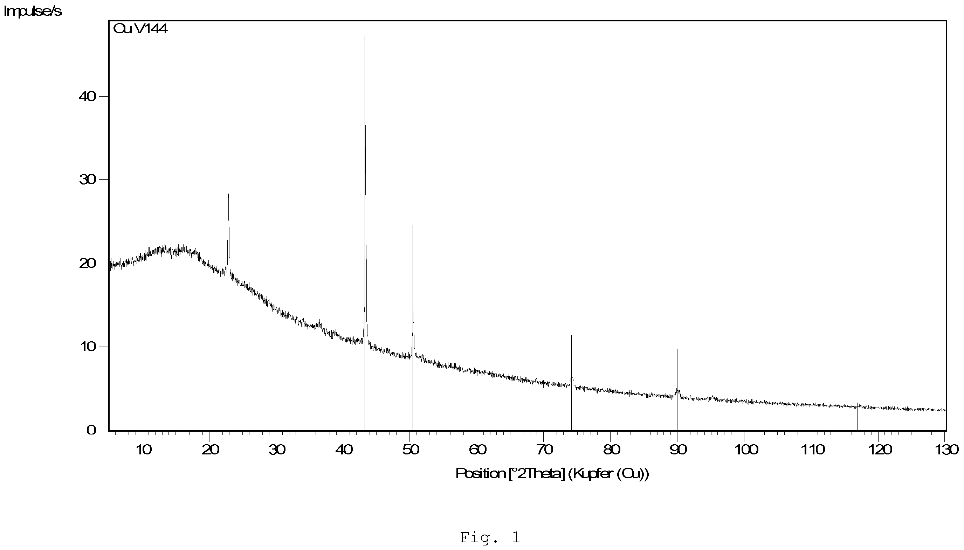

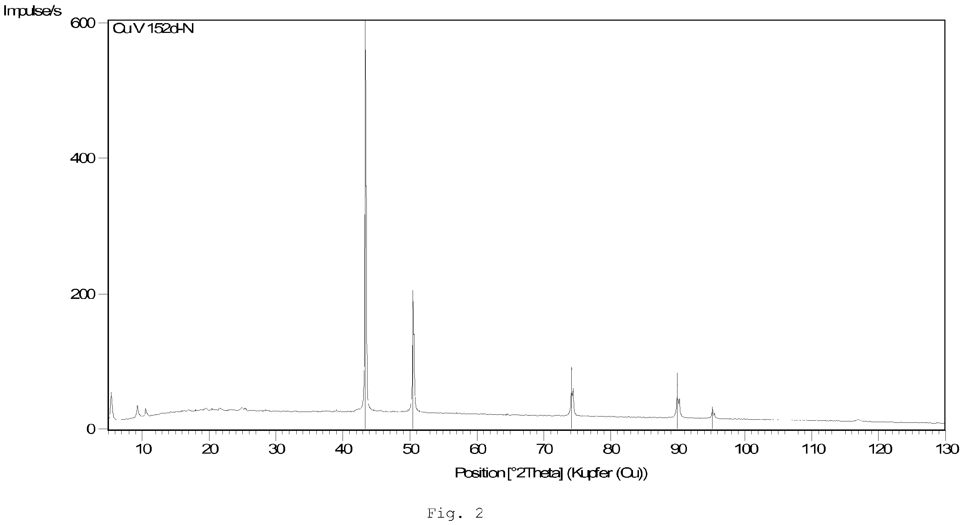

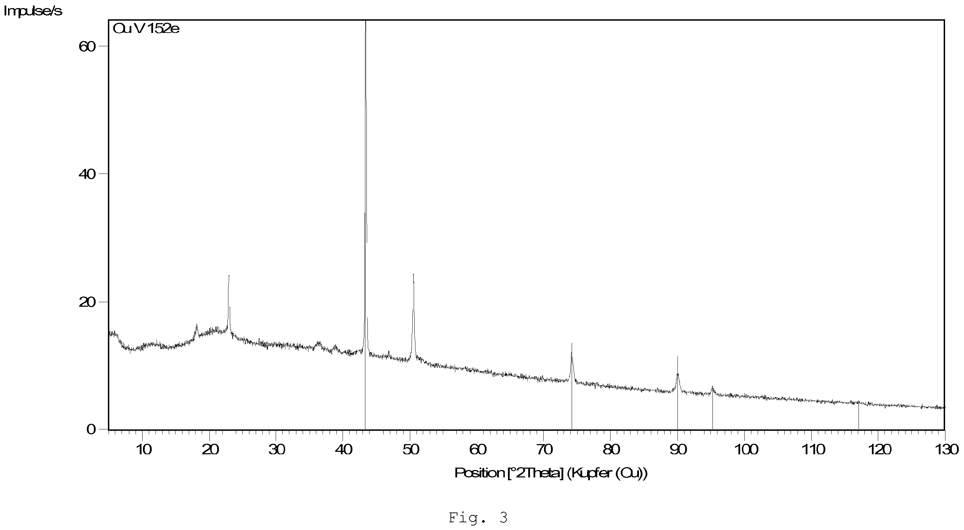

Die Figuren 1, 2 und 3 zeigen XRD-Spektren der erhaltenen Metallkolloiden. Die XRD-Spektren zeigen reines, kristallines Kupfer mit den charakteristischen Reflexen, ohne Kupferoxide oder -carbonate. Alle theoretischen Bragg-Reflexe können beobachtet werden: Die 2θ-Werte liegen bei 43,4°, 50,6°, 74.1°, 90,0° und 95,2°. Dies entspricht den Miller Indizes (111), (200), (220), (311) und (222) der fcc -Struktur. Nach der Modifizierung treten zusätzlich zu den Kupfer-Reflexen weitere bei hauptsächlich kleinen 2θ-Werten auf.

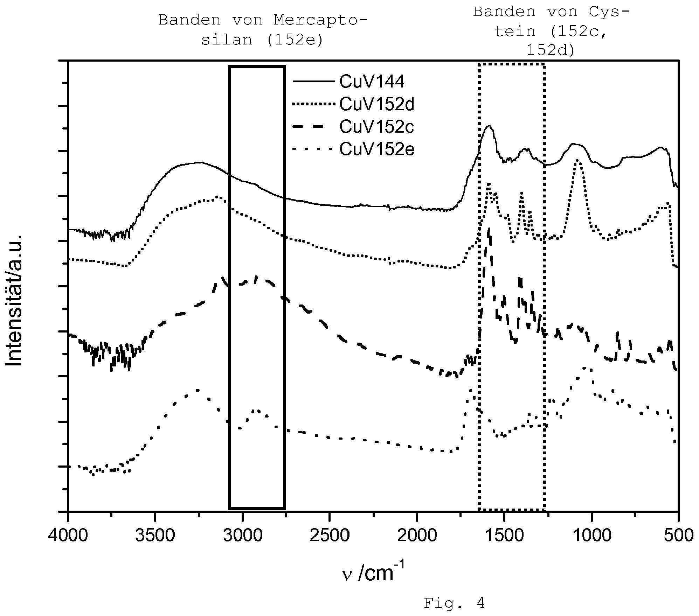

Figur 4 zeigt Infrarot-Spektren unterschiedlich modifizierter Kupferkolloide. Alle Spektren wurden nach Querstromfiltration aufgenommen. Im Bereich von 3100 cm⁻¹ bis 2750 cm⁻¹ befinden sich die Banden für das in einer Probe verwendete Mercaptosilan. Im Bereich von ca. 1700 cm⁻¹ bis 1250 cm⁻¹ liegen die Banden von Cystein, die für zwei Proben verwendet wurden. Die Messung zeigt, dass auch nach Querstromfiltration die Oberfläche der Metallkolloide mit Komplexbildnern belegt ist.

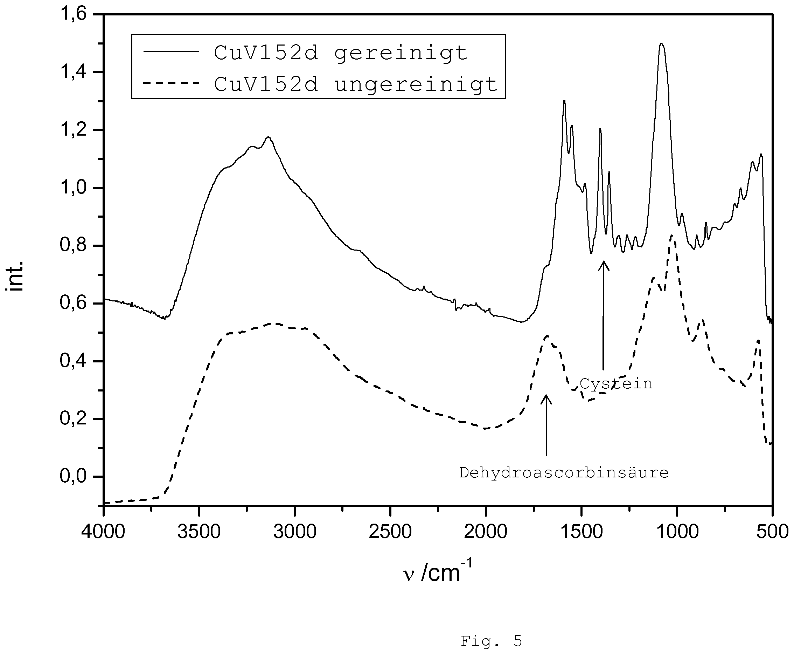

Figur 5 zeigt Infrarot-Spektren einer Verbindung CuV152d vor und nach der Querstromfiltration. Deutlich sind bei der ungereinigten Probe die Banden der Dehydroascorbinsäure zu erkennen. Nach der Reinigung sind deutlich die Banden des Komplexbildners Cystein zu erkennen, der erfolgreich auf der Oberfläche des Metallkolloids angebunden wurde.

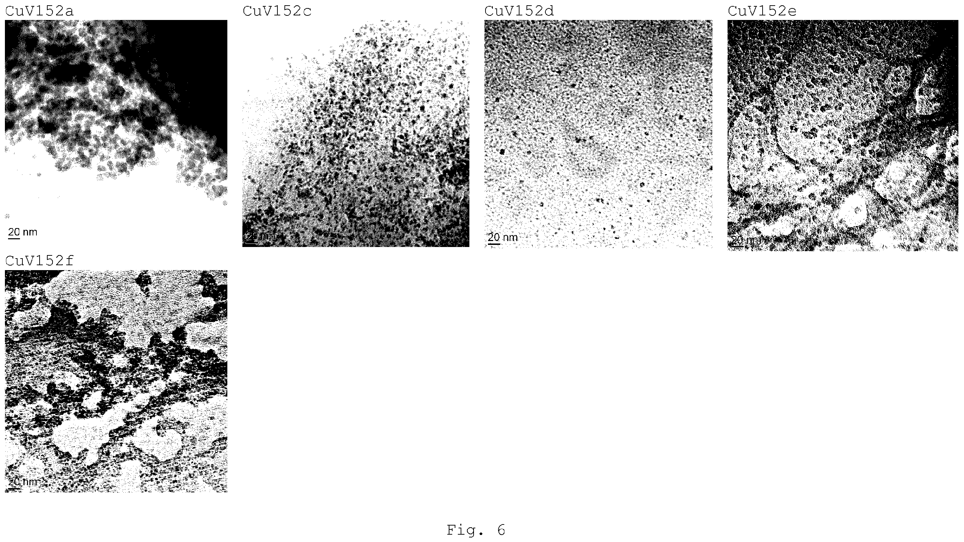

Figur 6 zeigt TEM-Aufnahmen (Transmissionselektronenmikroskopie) getrockneter Partikeldispersionen.

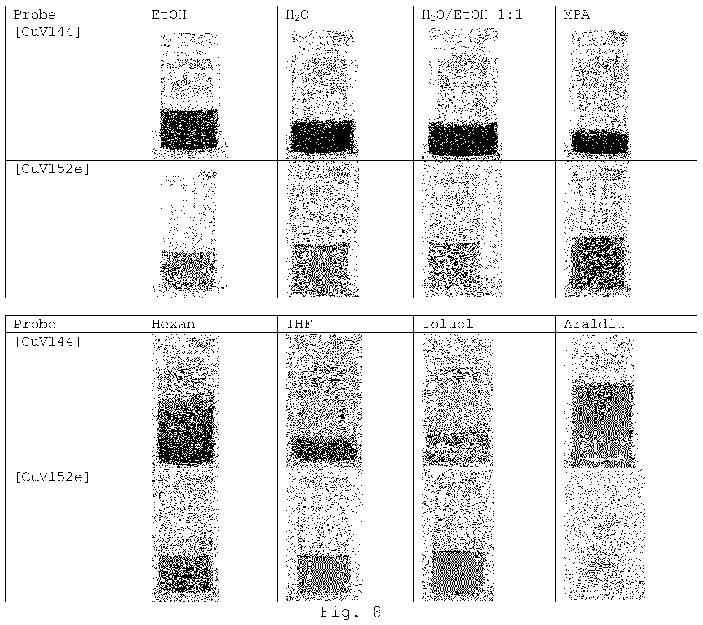

Figur 8 zeigt die Stabilität nach vollständiger Dispergierung und Lagerung über 4 Wochen. Eine genauere Auswertung des Dispergierverhaltens in Medien mit unterschiedlicher Polarität und Hydrophilie nach visueller Begutachtung (++: vollständig dispergierbar / Stabilität über 4 Wochen, +: vollständig dispergierbar / Stabilität über 2 Wochen, ○: vollständig dispergierbar / Stabilität über 1 Woche, -: vollständig dispergierbar, Stabilität über 1 Tag; MPA: 1-Methoxypropylacetat; Araldit).

Die Tabelle 2 zeigt, dass alle hergestellten Metallkolloide in einem breiten Spektrum an Lösungsmittel vollständig dispergierbar sind. Dabei sind die mit Silanen modifizierten Metallkolloide in fast allen Lösungsmitteln mit hervorragender Stabilität dispergierbar.

Tabelle 1 zeigt das Ergebnis der Elementaranalyse für unterschiedliche Metallkolloide (Kohlenstoffgehalte (C-%), Stickstoffgehalte (N-%) und Schwefelgehalte (S-%) in Gew.-% nach Reinigung mittels Zentrifugation (Z) bzw. Querstromfiltration (QS); Nachweisgrenze: 0,1 Gew.-%.).

Die Elementaranalyse (CHNS) erfolgte über Hochtemperaturverbrennung (bis 1200 °C) und Gaskomponententrennung mit einer TDP-Säule (temperature programmable desorption; vario Micro Cube, Elementar Analysensysteme GmbH Deutschland). Die Eichung des Gerätes erfolgte mit Sulfanilamid unterschiedlicher Einwaage vom Gerätehersteller (theor.: 16,26 Gew. % N; 41,85 Gew.% C; 4,68 Gew.% H und 18,62 Gew.% S). Die Tagesfaktorbestimmung erfolgte direkt vor der Messung durch 5-maliges Messen von ca. 2,0 mg Sulfanilamid. Zu den Proben wurde als Zusatz Wolframoxid gegeben. Gemessen wurden die getrockneten Pulver.

Bei Reinigung mittels Zentrifugation wurden die erhaltenen Metallkolloid-Dispersionen ohne Querstromfiltration bei 12857 rcf (relative centrifugal force) für 10 Minuten zentrifugiert. Der Überstand wurde abgegossen oder abpipettiert. Soweit erforderlich, wurde erneut Lösungsmittel aufgefüllt, die Proben geschüttelt und erneut zentrifugiert. Dies wurde so lange wiederholt (in der Regel 3 bis 4 mal) bis keine Schaumbildung mehr erfolgte und der Überstand nahezu farblos war.

### Beispiel 1: Synthese mit CuSO₄ / Dehydroascorbinsäure / Ascorbinsäure [Masterbatch CuV144], Cu:Ascorbinsäure 2:1

75 g (0,3 mol) CuSO₄ • 5 H₂O wurde in 300 ml Wasser aufgelöst (1M) und in 1 l Rundkolben vorgelegt. Bei 80°C und unter starkem Rühren (700 rpm) wurde 1M-Lösung von Ascorbinsäure (26,4 g in 150 ml Wasser) langsam (5 ml/min) zugetropft. Die Farbe änderte sich von blau nach schwarz. Die Reaktionsmischung wurde bei 80 °C für weitere 18 h und bei einer Rührgeschwindigkeit von 400 rpm weitergerührt. Die Reaktionsmischung wurde mittels Querstromfiltration (Säule: Midikros 0,2 µm (size cut off), Polyethersulfon-PES) von der überschüssigen Ascorbinsäure gereinigt. Das Retentat wurde 1:1 mit Wasser verdünnt und durch die Säule weiterfiltriert. Dieser Vorgang wurde dreimal wiederholt. Anschließend wurde sie zentrifugiert und dekantiert. Falls gewünscht wurde das Pulver anschließend getrocknet.

### Beispiel 2: Synthese mit CuSO₄ / Dehydroascorbinsäure / Ascorbinsäure [Masterbatch CuV153], Cu:Ascorbinsäure 1:2

75 g CuSO₄ • 5 H₂O wurde in 300 ml Wasser aufgelöst (1M) und in einem 1 l Rundkolben vorgelegt. Bei 80 °C und unter starkem Rühren (700 rpm) wurde 1M-Lösung von Ascorbinsäure (105,6 g in 500 ml Wasser langsam (10 ml/min) zugetropft. Die Farbe änderte sich von blau nach schwarz. Die Reaktionsmischung wurde bei 80 °C für weitere 18 h und bei einer Rührgeschwindigkeit von 400 rpm weitergerührt. Die Reaktionsmischung wurde mittels Querstromfiltration (Säule: Midikros 0,2 µm, Polyethersulfon-PES) von der überschüssigen Ascorbinsäure gereinigt. Das Retentat wurde 1:1 mit Wasser verdünnt und durch die Säule weiterfiltriert. Dieser Vorgang wurde dreimal wiederholt.

### Beispiel 3: Synthese mit CuSO₄ / Cystein / Ascorbinsäure Cu:Cystein 20:1 - direkt [CuV152d]

25 g (0,1 mol) CuSO₄ • 5 H₂O wurde in 100 ml Wasser aufgelöst (1M) und in 250 ml Rundkolben vorgelegt. Bei 80 °C und unter starkem Rühren (700 rpm) wurde eine Lösung von 0,6 g (0,005 mol) Cystein in 50 ml Wasser zugetropft. Es bildete sich weißer feiner Niederschlag. Anschließend wurde 1M-Lösung von Ascorbinsäure (8,8 g in 50 ml Wasser) langsam (5 ml/min) zugetropft. Die Reaktionsmischung wurde bei 80 °C für weitere 18 h und bei einer Rührgeschwindigkeit von 400 rpm weitergerührt. Die braune Reaktionsmischung zeigte, dass die Reaktion vollständig ist. Die Reaktionsmischung wurde mittels Querstromfiltration (Säule: Midikros 0,2 µm, Polyethersulfon-PES) von der überschüssigen Ascorbinsäure gereinigt. Das Retentat wurde 1:1 mit Wasser verdünnt und durch die Säule weiterfiltriert. Dieser Vorgang wurde dreimal wiederholt.

### Beispiel 4: Synthese mit CuSO₄ / Cystein / Ascorbinsäure, Cu:Cystein 10:1 - direkt [CuV152a]

25 g CuSO₄ • 5 H₂O wurde in 100 ml Wasser aufgelöst (1M) und in einem 250 ml Rundkolben vorgelegt. Bei 80 °C und unter starkem Rühren (800 rpm) wurde eine Lösung von 1,2 g Cystein in 50 ml Wasser zugetropft. Es bildete sich ein weißer feiner Niederschlag. Anschließend wurde eine 1M-Lösung von Ascorbinsäure (8,8 g in 50 ml Wasser) langsam (5 ml/min) zugetropft. Die Reaktionsmischung wurde bei 80 °C für weitere 18 h und bei einer Rührgeschwindigkeit von 400 rpm weitergerührt. Die braune Reaktionsmischung zeigte, dass die Reaktion vollständig ist. Die Reaktionsmischung wurde mittels Querstromfiltration (Säule: Midikros 0,2 µm, Polyethersulfon-PES) von der überschüssigen Ascorbinsäure gereinigt. Das Retentat wurde 1:1 mit Wasser verdünnt und durch die Säule weiterfiltriert. Dieser Vorgang wurde dreimal wiederholt.

### Beispiel 5: Synthese mit CuSO₄ / Cystein / Ascorbinsäure, Cu:Cystein 20:1 - indirekt [CuV152c]

2,15 g CuV144 wurde in 80 ml Wasser bei 80°C redispergiert. Es bildete sich eine braune Suspension. Eine Lösung von 0,2 g Cystein in 20 ml Wasser wurde zugetropft. Die Reaktionsmischung wurde bei 80 °C für weitere 18 h und bei einer Rührgeschwindigkeit von 400 rpm weitergerührt. Die Reaktionsmischung wurde mittels Querstromfiltration (Säule: Midikros 0,2 µm, Polyethersulfon-PES) von die überschüssige Ascorbinsäure bzw. Dehydroascorbinsäure gereinigt. Das Retentat wurde 1:1 mit Wasser verdünnt und durch die Säule weiterfiltriert. Dieser Vorgang wurde dreimal wiederholt.

### Beispiel 6: Synthese mit CuSO₄ / Cystein / Ascorbinsäure, Cu:Cystein 10:1 - indirekt [CuV152f]

2,15 g CuV144 wurde in 80 ml Wasser bei 80 °C redispergiert. Es bildete sich eine braune Suspension. Eine Lösung von 0,4 g Cystein in 20 ml Wasser wurde zugetropft. Die Reaktionsmischung wurde bei 80 °C für weitere 18 h und bei einer Rührgeschwindigkeit von 400 rpm weitergerührt. Die Reaktionsmischung wurde mittels Querstromfiltration (Säule: Midikros 0,2 µm, Polyethersulfon-PES) von der überschüssigen Ascorbinsäure gereinigt. Das Retentat wurde 1:1 mit Wasser verdünnt und durch die Säule weiterfiltriert. Dieser Vorgang wurde dreimal wiederholt.

### Beispiel 7: Synthese mit CuSO₄ / Mercaptosilan / Ascorbinsäure, Cu:Mercaptosilan 20:1 - indirekt [CuV152e]

2,15 g CuV144 wurde in 80 ml THF bei 60 °C redispergiert. Es bildete sich eine schwarze Suspension. Eine Lösung von 0,44 g 3-Mercaptopropyltriethoxysilan in 10 ml THF wurde zugetropft. Die Reaktionsmischung wurde bei 60 °C für weitere 18 h und bei einer Rührgeschwindigkeit von 400 rpm weitergerührt. Die Reaktionsmischung wurde zunächst abzentrifugiert und mit Isopropanol aufgenommen. Danach wurde mittels Querstromfiltration (Säule: Midikros 0,2 µm, Polyethersulfon-PES) gereinigt. Das Retentat wurde 1:1 mit Isopropanol verdünnt und durch die Säule weiterfiltriert. Dieser Vorgang wurde dreimal wiederholt.

### Beispiel 8: Synthese mit CuSO₄ / Mercaptosilan / Ascorbinsäure, Cu:Mercaptosilan 10:1 - indirekt [CuV152g]

2,15 g CuV144 wurde in 80 ml THF bei 60 °C redispergiert. Es bildet sich eine schwarze Suspension. Eine Lösung von 1 g 3-Mercaptopropyltriethoxysilan in 15 ml THF wurde zugetropft. Die Reaktionsmischung wurde bei 60 °C für weitere 18 h und bei einer Rührgeschwindigkeit von 400 rpm weitergerührt. Die Reaktionsmischung wurde zunächst abzentrifugiert und mit Isopropanol aufgenommen. Danach wurde mittels Querstromfiltration (Säule: Midikros 0,2 µm, Polyethersulfon-PES) gereinigt. Das Retentat wurde mit Isopropanol verdünnt (1:1) und durch die Säule weiterfiltriert. Dieser Vorgang wurde dreimal wiederholt.

### Beispiel 9: 1 Gew.-% Cu aus CuV152e in UV-härtbarem Epoxidharz

0,3 g CuV152e wurde in 25 g Araldit CY 179 CH (Cycloaliphatisches Epoxidharz 7-Oxabicyclo[4.1.0]heptan-3 carbonsäure, 7-Oxabicyclo[4.1.0]hept-3-ylmethylester, Cycloaliphatisches Epoxidharz 60,00 - 100,00 Gew.-%); eingerührt und weitere 16 h bei Raumtemperatur gerührt. Es wurden 0,1 g BYK 307 (Polyethermodifiziertes Polydimethylsiloxan) und 2,5 g 3-Ethyl-3-oxetanemethanol zugegeben und weitere 30 min gerührt. Es erfolgte die Zugabe des UV-Starters UVI 6976 (Triarylsulfonium hexafluoroantimonat-Salze)und Rühren für 30 min. Die erhaltene Mischung wurde per Spiralrakel auf Edelstahl aufgebracht und durch UV-Belichtung (750 W, 1,5 min) und eine nachfolgende thermische Behandlung bei 140 °C über 30 min ausgehärtet. Die Schichtdicke betrug 22,87 ± 1,53 µm. Weiterhin wurden über das gleiche Härtungsverfahren Formkörper mit 3 mm Dicke hergestellt.

### Beispiel 10: 1 Gew.-% Cu aus CuV152d in Polyurethanharz

9,4 g Desmophen 1145 (verzweigtes Polyester/Polyether-Polyol), 6,3 g Desmophen 1150 (verzweigtes Polyester/Polyether-Polyol), 0,4 g Desmophen 1380 BT (Polypropylenetherpolyol) und 9,0 g Desmodur VL (Polyisocyanat, Diphenylmethandiisocyanat) wurden zusammen mit 0,25 g CuV152d für 10 min bei Raumtemperatur gerührt. Die erhaltene Mischung wurde per Spiralrakel auf Edelstahl aufgebracht und durch thermische Behandlung bei 140 °C über 30 min ausgehärtet. Die Schichtdicke betrug 35 ± 3 µm.

### Beispiel 11: 1 Gew.-% Cu aus CuV152a in Acrylatharz

10 g Trimethylolpropantriacrylat wurden mit 0,01 g CuV152a, 0,01 g AIBN (Azo-bis-Isobutyronitril) sowie 0,01 g Irgacure 184 (1-Hydroxy-cyclohexyl-phenylketon) versetzt und bei Raumtemperatur gerührt. Die erhaltene Mischung wurde per Spiralrakel auf Edelstahl aufgebracht und durch UV-Belichtung (750 W, 1,5 min) und eine nachfolgende thermische Behandlung bei 130 °C über 30 min ausgehärtet. Die Schichtdicke betrug 28 ± 2 µm.

### Beispiel 12: 1 Gew.-% Cu aus CuV124 in PU-Pulverlack

12 g der getrockneten Probe CuV144 wurden in THF aufgenommen und das THF fast bis zur Trockne entfernt. Der Rückstand wurde mit 446 g Cryolat 2839, 136 g Crelan EF 403 (Cycloaliphatisches Polyuretdion), 3,0 g Benzoin und 3,0 g Modaflow III (Polyacrylat, Ethylacrylat-2-ethylhexylacrylat-Copolymer) vermischt und extrudiert. Die erhaltenen Partikel wurden mittels Strahlmühle bei 3 bar und Sichter (6000 U/min) gemahlen. Anschließend erfolgte die Beschichtung von Stahl und Aluminium mittels Corona-Sprühverfahren. Die thermische Aushärtung erfolgte bei 200 °C über 20 min. Die Schichtdicke betrug 125 ± 10 µm. Durch Auflösen des Aluminiumträgers mit HCl conc. konnten darüber hinaus freistehende PU-Folien mit einer Dicke von ca. 120 µm erhalten werden.

### Beispiel 13: Cu aus CuV152c in Araldit

0,06 g CuV152c wurde in 12,5 g Araldit CY 179 CH (Cycloaliphatisches Epoxidharz); eingerührt und weitere 16 h bei Raumtemperatur gerührt. Es wurden 0,03 g BYK 307 Polyethermodifiziertes Polydimethylsiloxan) und 1,25 g 3-Ethyl-3-oxetanemethanol zugegeben und weitere 30 min gerührt. Es erfolgte die Zugabe des UV-Starters UVI 6976 (Triarylsulfonium hexafluoroantimonat-Salze) und Rühren für 30 min. Die erhaltene Mischung wurde per Spiralrakel auf Edelstahl aufgebracht und durch UV-Belichtung (750 W, 1,5 min) und eine nachfolgende thermische Behandlung bei 140 °C über 30 min ausgehärtet. Weiterhin wurden über das gleiche Härtungsverfahren Formkörper mit 3 mm Dicke hergestellt.

**Tabelle 1**

| System | Molverh. Cu/Prec. | C-% (QS) | N-% (QS) | S-% (QS) |
|---|---|---|---|---|
| [CuV144] | - | 13,88 ± 1,89 | 0,11 ± 0,06 | 0,14 ± 0,08 |
| [CuV153] | - | 20,32 ± 0,51 | < 0,1 | < 0,1 |
| [CuV152d] | 20 / 1 | 13,74 ± 1,17 | 1,68 ± 0,24 | 5,97 ± 0,95 |
| [CuV152a] | 10 / 1 | 10,43 ± 0,13 | 1,94 ± 0,03 | 6,63 ± 0,30 |
| [CuV152c] | 20 / 1 | 19,10 ± 0,28 | 2,86 ± 0,02 | 8,40 ± 0,17 |
| [CuV152f] | 10 / 1 | 19,86 ± 0,45 | 3,35 ± 0,11 | 9,28 ± 0,38 |
| [CuV152e] | 20 / 1 | 9,59 ± 1,34 | 0,14 ± 0,05 | 2,74 ± 0,40 |
| [CuV152g] | 10 / 1 | 8,56 ± 0,38 | < 0,1 | 3,19 ± 0,13 |

**Tabelle 2**

| Medium | [CuV144] | [CuV152d] | [CuV152a] | [CuV152c] | [CuV152f] | [CuV152e] | [CuV152g] |
|---|---|---|---|---|---|---|---|
| EtOH | + | ○ | + | ○ | ○ | ++ | + |
| H₂O | + | + | ○ | + | ○ | ++ | + |
| H₂O/EtOH 1:1 | + | ○ | ○ | ○ | + | ++ | + |
| MPA | + | + | ○ | + | - | ++ | + |
| Hexan | - | - | - | - | - | ○ | ○ |
| THF | + | ○ | ○ | ○ | ○ | ++ | + |
| Toluol | - | - | - | - | - | ++ | + |
| Araldit | - | ○ | + | + | + | ++ | + |

## Patentansprüche

1. Verfahren zur Herstellung von Metallkolloiden umfassend folgende Schritte:
a) Herstellen einer Zusammensetzung umfassend
a1) mindestens eine Art von Metallionen;
a2) mindestens ein organisches Reduktionsmittel;
a3) mindestens einen Komplexbildner umfassend mindestens eine funktionelle Gruppe, welche mit den hergestellten Metallkolloiden interagieren kann, wobei das Reduktionsmittel und/oder die oxidierte Form des Reduktionsmittels als ein Komplexbildner fungieren kann, wobei das molare Verhältnis zwischen Metallionen und Komplexbildner zwischen 30:1 und 1,5:1 liegt;
a4) mindestens ein Lösungsmittel;
b) thermische und/oder photochemische Aktivierung während oder nach der Herstellung der Zusammensetzung;
c) Reduktion der mindestens einen Art von Metallionen zu Metallkolloiden;
d) Aufreinigung der modifizierten Metallkolloide.

2. Verfahren nach Anspruch 1, **dadurch gekennzeichnet, dass** die Aufreinigung der Metallkolloide mittels Querstromfiltration erfolgt.

3. Verfahren nach einem der Ansprüche 1 oder 2, **dadurch gekennzeichnet, dass**
die Metallionen Ionen der Metalle der Gruppen 8 bis 16 sind, vorzugsweise Metallionen Ionen der Metalle Cu, Ag, Au, Ni, Pd, Pt, Co, Rh, Ir, Ru, Os, Se, Te, Cd, Bi, In, Ga, As, Ti, V, W, Mo, Sn und/oder Zn sind.

4. Verfahren nach einem der Ansprüche 1 bis 3, **dadurch gekennzeichnet, dass**
die Metallionen als Metallsalze in die Zusammensetzung eingebracht werden, wobei vorzugsweise
die Salze ausgewählt sind aus der Gruppe enthaltend CuCl, CuCl₂, CuSO₄, Cu(NO₃) ₂, AgNO₃, H(AuCl₄), PdCl₂, ZnCl₂, ZnSO₄, Cu(CH₃COO)₂, Kupferacetylacetonat, CuCO₃, Cu(ClO₄)₂, Cu(OH)₂.

5. Verfahren nach einem der Ansprüche 1 bis 4, **dadurch gekennzeichnet, dass**
das organische Reduktionsmittel eine Verbindung mit einem Molekulargewicht von unter 1000 g/mol ist.

6. Verfahren nach einem der Ansprüche 1 bis 5, **dadurch gekennzeichnet, dass**
das organische Reduktionsmittel ausgewählt ist aus der Gruppe enthaltend reduzierend wirkende Carbonsäuren, Zucker, Uronsäuren, Aldehyde, wobei vorzugsweise
das organische Reduktionsmittel eine reduzierend wirkende Carbonsäure, bevorzugt Zitronensäure, Ascorbinsäure, Äpfelsäure ist.

7. Verfahren nach einem der Ansprüche 1 bis 6, **dadurch gekennzeichnet, dass**
die funktionelle Gruppe zur Interaktion mit den hergestellten Metallkolloiden mindestens ein Heteroatom ist ausgewählt aus der Gruppe N, O, S, F, Cl, Br, I, wobei vorzugsweise die mindestens eine funktionelle Gruppe ausgewählt ist aus der Gruppe umfassend Aminogruppen, Carbonylgruppen wie Carbonsäuregruppen, Carbonsäureamidgruppen, Imidgruppen, Carbonsäureanhydridgruppen, Carbonsäureestergruppen, Aldehydgruppen, Ketogruppen, Urethane, in 1,2-Stellung oder 1,3-Stellung benachbarte Carbonylgruppen, Thiolgruppen, Disulfidgruppen, Hydroxylgruppen, Sulfonylgruppen, Phosphorsäuregruppen.

8. Verfahren nach einem der Ansprüche 1 bis 7, **dadurch gekennzeichnet, dass**
der mindestens eine Komplexbildner eine Verbindung mit einem Molekulargewicht von unter 1000 g/mol ist.

9. Verfahren nach einem der Ansprüche 1 bis 8, **dadurch gekennzeichnet, dass**
mindestens ein Reduktionsmittel ein Komplexbildner oder eine Vorläuferverbindung von einem Komplexbildner ist.

10. Verfahren nach einem der Ansprüche 1 bis 9, **dadurch gekennzeichnet, dass**
die oxidierte Form des Reduktionsmittels ein Komplexbildner ist.

11. Verfahren nach einem der Ansprüche 1 bis 10, **dadurch gekennzeichnet, dass**
die Metallionen Kupferionen sind.

## Claims

1. A process for producing metal colloids comprising the following steps:
a) production of a composition comprising
a1) at least one type of metal ion;
a2) at least one organic reducing agent;
a3) at least one complexing agent comprising at least one functional group which can interact with the produced metal colloids, where the reducing agent and/or the oxidized form of the reducing agent can act as a complexing agent, wherein the molar ratio between metal ions and complexing agent is between 30:1 and 1,5:1;
a4) at least one solvent;
b) thermal and/or photochemical activation during or after the production of the composition;
c) reduction of the at least one type of metal ions to metal colloids;
d) purification of the modified metal colloids.

2. The process as claimed in claim 1, **characterized in that** the purification of the metal colloids takes place by means of crossflow filtration.

3. The process as claimed in one of claims 1 or 2, **characterized in that**
the metal ions are ions of the metals of groups 8 to 16, preferably the metal ions are ions of the metals Cu, Ag, Au, Ni, Pd, Pt, Co, Rh, Ir, Ru, Os, Se, Te, Cd, Bi, In, Ga, As, Ti, V, W, Mo, Sn and/or Zn.

4. The process as claimed in one of claims 1 to 3, **characterized in that**
the metal ions are introduced as metal salts into the composition, wherein preferably the salts are selected from the group comprising CuCl, CuCl₂, CuSO₄, Cu(NO₃)₂, AgNO₃, H(AuCl₄), PdCl₂, ZnCl₂, ZnSO₄, Cu(CH₃COO)₂, copper acetylacetonate, CuCO₃, Cu(ClO₄)₂, Cu(OH)₂.

5. The process as claimed in one of claims 1 to 4, **characterized in that**
the organic reducing agent is a low molecular weight compound with a molecular weight of less than 1000 g/mol.

6. The process as claimed in one of claims 1 to 5, **characterized in that**
the organic reducing agent is selected from the group comprising reductive carboxylic acids, sugars, uronic acids, aldehydes, wherein preferably the organic reducing agent is a reductive carboxylic acid, preferably citric acid, ascorbic acid, malic acid.

7. The process as claimed in one of claims 1 to 6, **characterized in that**
the functional group for the interaction with the produced metal colloids is at least one heteroatom selected from the group N, O, S, F, Cl, Br, I, wherein preferably the at least one functional group is selected from the group comprising amino groups, carbonyl groups such as carboxylic acid groups, carboxamide groups, imide groups, carboxylic anhydride groups, carboxylic acid ester groups, aldehyde groups, keto groups, urethanes, carbonyl groups adjacent in 1,2 position or 1,3 position, thiol groups, disulphide groups, hydroxyl groups, sulphonyl groups, phosphoric acid groups.

8. The process as claimed in one of claims 1 to 7, **characterized in that**
the at least one complexing agent is a low molecular weight compound with a molecular weight of less than 1000 g/mol.

9. The process as claimed in one of claims 1 to 8, **characterized in that**
at least one reducing agent is a complexing agent or a precursor compound of a complexing agent.

10. The process as claimed in one of claims 1 to 9, **characterized in that**
the oxidized form of the reducing agent is a complexing agent.

11. The process as claimed in one of claims 1 to 10, **characterized in that**
the metal ions are copper ions.

## Revendications

1. Procédé pour la préparation de colloïdes métalliques comprenant les étapes suivantes :
a) préparation d'une composition comprenant
a1) au moins une sorte d'ions métalliques ;
a2) au moins un agent de réduction organique ;
a3) au moins un agent complexant comprenant au moins un groupe fonctionnel qui peut interagir avec les colloïdes métalliques préparés, l'agent de réduction et/ou la forme oxydée de l'agent de réduction pouvant fonctionner en tant qu'agent complexant, le rapport molaire entre les ions métalliques et l'agent complexant étant compris entre 30:1 et 1,5:1 ;
a4) au moins un solvant ;
b) activation thermique et/ou photochimique pendant ou après la préparation de la composition ;
c) réduction de l'au moins une sorte d'ions métalliques en colloïdes métalliques ;
d) purification des colloïdes métalliques modifiés.

2. Procédé selon la revendication 1, **caractérisé en ce que** la purification de colloïdes métalliques est réalisée au moyen d'une filtration à courant transversal.

3. Procédé selon l'une quelconque des revendications 1 et 2, **caractérisé en ce que** les ions métalliques sont des ions des métaux des groupes 8 à 16, de préférence les ions métalliques sont des ions des métaux Cu, Ag, Au, Ni, Pd, Pt, Co, Rh, Ir, Ru, Os, Se, Te, Cd, Bi, In, Ga, As, Ti, V, W, Mo, Sn et/ou Zn.

4. Procédé selon l'une quelconque des revendications 1 à 3, **caractérisé en ce que** les ions métalliques sont introduits dans la composition en tant que sels métalliques, de préférence les sels étant choisis dans le groupe contenant CuCl, CuCl₂, CuSO₄, Cu(NO₃)₂, AgNO₃, H(AuCl₄), PdCl₂, ZnCl₂, ZnSO₄, Cu(CH₃COO)₂, acétylacétonate de cuivre, CuCO₃, Cu(ClO₄)₂, Cu(OH)₂.

5. Procédé selon l'une quelconque des revendications 1 à 4, **caractérisé en ce que** l'agent de réduction organique est un composé doté d'un poids moléculaire inférieur à 1 000 g/mole.

6. Procédé selon l'une quelconque des revendications 1 à 5, **caractérisé en ce que** l'agent de réduction organique est choisi dans le groupe contenant des acides carboxylique, des sucres, des acides uroniques, des aldéhydes à effet réducteur, de préférence l'agent de réduction organique étant un acide carboxylique à effet réducteur, préférablement l'acide citrique, l'acide ascorbique, l'acide malique.

7. Procédé selon l'une quelconque des revendications 1 à 6, **caractérisé en ce que** le groupe fonctionnel pour l'interaction avec les colloïdes métalliques préparés est au moins un hétéroatome choisi dans le groupe N, O, S, F, Cl, Br, I, de préférence l'au moins un groupe fonctionnel étant choisi dans le groupe comprenant des groupes amino, des groupes carbonyle comme des groupes acide carboxylique, des groupes amide d'acide carboxylique, des groupes imide, des groupes anhydride d'acide carboxylique, des groupes ester d'acide carboxylique, des groupes aldéhyde, des groupes céto, des uréthanes, des groupes carbonyle adjacents en position 1,2 ou 1,3, des groupes thiol, des groupes disulfure, des groupes hydroxyle, des groupes sulfonyle, des groupes acide phosphorique.

8. Procédé selon l'une quelconque des revendications 1 à 7, **caractérisé en ce que** l'au moins un agent complexant est un composé doté d'un poids moléculaire inférieur à 1 000 g/mole.

9. Procédé selon l'une quelconque des revendications 1 à 8, **caractérisé en ce qu'**au moins un agent de réduction est un agent complexant ou un composé précurseur d'un agent complexant.

10. Procédé selon l'une quelconque des revendications 1 à 9, **caractérisé en ce que** la forme oxydée de l'agent de réduction est un agent complexant.

11. Procédé selon l'une quelconque des revendications 1 à 10, **caractérisé en ce que** les ions métalliques sont des ions cuivre.
